# EUROPÄISCHE PATENTSCHRIFT

(11) **EP 3 027 301 B1**
(45) Veröffentlichungstag und Bekanntmachung des Hinweises auf die Patenterteilung: **12.04.2017**
(21) Anmeldenummer: 14728591.0
(22) Anmeldetag: 10.06.2014
(51) Int. Cl.: B01F 17/00

(54) **PUMPBARE, LAGERSTABILE SUSPENSION VON FASERN IN EINER ORGANISCHEN PHASE**
PUMPABLE, STORAGE-STABLE SUSPENSION OF FIBRES IN AN ORGANIC PHASE
SUSPENSION STABLE AU STOCKAGE POUVANT ÊTRE POMPÉE DE FIBRES DANS UNE PHASE ORGANIQUE

(30) Priorität: 31.07.2013 EP 13178707
(43) Veröffentlichungstag der Anmeldung: 08.06.2016
(73) Patentinhaber: BASF SE, 67056 Ludwigshafen am Rhein (DE)
(72) Erfinder: FEICHTENSCHLAGER, Bernhard, 83278 Traunstein (DE); KIERAT, Radoslaw, 83352 Altenmarkt (DE); BUCHNER, Christian, 83342 Peterskirchen (DE)
(74) Vertreter: Witz, Michael
(86) Internationale Anmeldenummer: PCT/EP2014/061971
(87) Internationale Veröffentlichungsnummer: WO 2015/014520

(56) Entgegenhaltungen:
- DE-A1- 10 150 998
- JP-A- 2006 124 847
- K. T. TZOU ET AL.: "Improved Solution Stability and Spinnability of Concentrated Polyaniline Solutions using N,N'-Dimethyl Propylene Urea as the spin Bath solvent", SYNTHETIC METALS, Nr. 69, 1995, Seiten 109-112, XP002718310,
- T.B. RICHARDSON ET AL.: "Study of Nanoreinforced shape Memory Polymers Processed by Casting and Extrusion", POLYMER COMPOSITES, 2011, Seiten 455-463, XP002718311, DOI: 10.1002/pc.21064

## Beschreibung

Die vorliegende Erfindung betrifft eine pumpbare, lagerstabile Suspension von Fasern in einer organischen Phase sowie die Verwendung eines disubstituierten Harnstoffs zum Suspendieren von Fasern in der organischen Phase.
Bei der Herstellung von faserhaltigen Beschichtungen, Bodenbelägen, Reifen, Kunstleder und dergleichen müssen regelmäßig Fasern dosiert werden. Die Handhabung solcher Fasern gestaltet sich oft schwierig. Gerade, wenn Fasern zu hydrophoben, öligen Flüssigkeiten zugegeben werden sollen, kann es aufgrund mangelnder Suspendierbarkeit der Fasern, möglicherweise auch durch elektrostatische Effekte, durch Zusammenlagerung der Fasern (sogenannte "Nesterbildung") etc. zu unerwünschten Schwierigkeiten kommen. Außerdem sind solche Fasern, insbesondere Kurzfaserschnitte, oft schlecht förderbar. Eine diskontinuierliche, ggf. manuelle Zugabe, insbesondere zu organischen Formulierungen, ist demgegenüber mit erhöhtem Arbeitsaufwand und damit erhöhten Kosten verbunden. In einem Beispiel der DE 10150998 A1 wird faserige Cellulose in einer Harnstofflösung suspendiert. Die der vorliegenden Erfindung zugrundeliegende Aufgabe bestand darin, die vorstehend geschilderten Schwierigkeiten im Wesentlichen zu überwinden. Insbesondere sollte eine leicht handhabbare Faserzubereitung zur Verfügung gestellt werden, die möglichst mechanisch förderbar sein sollte und auch bei längerer Lagerung nicht sedimentiert. Insbesondere bestand die Aufgabe in der Bereitstellung der erfindungsgemäßen pumpbaren, lagerstabilen Suspension. Die vorliegende Aufgabe wird mit den Merkmalen der unabhängigen Ansprüche gelöst. Die abhängigen Ansprüche betreffen bevorzugte Ausführungsformen der vorliegenden Erfindung. Es wurde überraschend gefunden, dass disubstituierte Harnstoffe in der Lage sind, eine Vielzahl von Fasern dauerhaft und in Form einer pumpbaren Suspension zu stabilisieren.
Ein erster Gegenstand der vorliegenden Erfindung besteht demgemäß in einer pumpbaren, lagerstabilen Suspension von Fasern in einer organischen Phase, umfassend 1,0 - 60 Gew.-% Fasern und 0,01 - 10 Gew.-% eines disubstituierten Harnstoffs (den Rest macht die organische Phase aus). Die Suspension kann außerdem weitere Inhaltsstoffe umfassen, wobei sich natürlich alle Prozentangaben zu 100 Gew.-% addieren müssen.
Vorzugsweise enthält die erfindungsgemäße Suspension 10 - 60 Gew.-%, insbesondere 25 - 50 Gew.-% Fasern.
Weiter bevorzugt enthält die erfindungsgemäße Suspension 0,05 - 10 Gew.-%, insbesondere 0,1 - 5 Gew.-% des disubstituierten Harnstoffs.
Im Sinne der vorliegenden Erfindung soll unter einer "organischen Phase" generell jede flüssige nicht-wassermischbare organische Verbindung verstanden werden. Nicht-wassermischbar bedeutet in diesem Zusammenhang, dass sich im System organische Verbindung/Wasser zwei Phasen ausbilden. Insbesondere soll die besagte organische Verbindung bei 20 °C zu weniger als 10 Gew.-%, vorzugsweise zu weniger als 2 Gew.-% und insbesondere zu weniger als 1 Gew.-% in Wasser löslich sein.

Vorzugsweise soll unter "organische Phase" indessen ein Mineralöl, Erdöl, Paraffinöl, Waschbenzin, Petroleum, naphthenisches Öl, aromatisches Öl, ein aliphatischer oder aromatischer Kohlenwasserstoff wie z.B. Benzol, Toluol und Xylol, ein fettes Öl (Triglycerid), ein Fettsäureester wie z.B. Biodiesel, ein Silikonöl, aber auch übliche Weichmacher wie z.B. verschiedene Phthalatester und hydrierte Phthalatester verstanden werden. Des Weiteren kann es sich bei der "organische Phase" auch um eine Reaktivkomponente zur Polymerbildung handeln, wie z.B. ein Acrylat oder ein Isocyanat. Es können aber auch Mischungen von mindestens zwei dieser Verbindungen eingesetzt werden. Ganz besonders bevorzugt sind aliphatische und aromatische Kohlenwasserstoffe.

"Fasern" sind im Verhältnis zu ihrer Länge dünne, flexible Gebilde mit einem Längen- zu Durchmesser-Verhältnis von vorzugsweise mindestens 10:1, besonders bevorzugt von mindestens 100:1. Die erfindungsgemäß geeigneten Fasern können aus einer Vielzahl verschiedener Materialien bestehen, wie z.B. aus Polyolefinen, umfassend Polyethylen und Polypropylen; Polyvinylalkohol; Polyacrylnitril; Polyestern, umfassend Polyglycoladipat, Polyethylenterephthalat, Polymilchsäure (PMS); Polyamiden, umfassend Polycaprolactam, Polyamid 66, Polyamid 6T; anorganischen Materialien, umfassend Glas, Kohlenstoff, Basalt und Metalle; oder nachwachsenden Materialien, umfassend Cellulose und Lignin; sowie Mischungen daraus.

Die Fasern weisen zweckmäßig Durchmesser von 2 µm bis 2 mm, vorzugsweise 10 µm bis 100 µm, und Längen von zweckmäßig 0,1 mm bis 25 cm, vorzugsweise 1 mm bis 10 cm, bei einem Aspektverhältnis (Längen- zu Durchmesser-Verhältnis) von mindestens 10, vorzugsweise mindestens 100, auf. Besonders bevorzugte Kurzfaserschnitte sind maximal 2,5 cm lang.

Der "disubstituierte Harnstoff" kann aus einem Monoisocyanat oder Polyisocyanat und einem organischen Amin erhalten werden. Das Monoisocyanat entspricht der Formel R¹-NCO, wobei R¹ vorzugsweise aus Methyl, Ethyl, n-Propyl, iso-Propyl, n-Butyl, sec-Butyl, tert.-Butyl, n-Pentyl, neo-Pentyl, n-Hexyl, 2-Ethyl-n-hexyl, n-Lauryl, sowie aus Cyclohexyl, Phenyl und Benzyl ausgewählt ist. Das Polyisocyanat ist vorzugsweise ein aliphatisches Isocyanat, ein aromatisches Isocyanat oder ein kombiniert aliphatisch/aromatisches Isocyanat mit einer NCO-Funktionalität (Anzahl der NCO -Gruppen im Molekül) von 2 bis 5, vorzugsweise von 2 bis 3. Geeignete Polyisocyanate umfassen Tetramethylen-1,4-diisocyanat, 2-Methylpentamethylen-1,5-diisocyanat, Hexamethylen-1,6-diisocyanat (HDI), 2,2,4- und 2,4,4-Trimethyl-hexamethylen-1,6-diisocyanat (TMDI), Dodecamethylen-1, 12-diisocyanat, Lysin- und Lysinesterdiisocyanat, 1-Isocyanato-3,3,5-trimethyl-5-isocyanatomethyl-cyclohexan (Isophorondiisocyanat - IPDI), 1,4-Diisocyanato-2,2,6-trimethylcyclohexan (TMCDI), 2,2'-, 2,4'- und 4,4'-Dicyclohexylmethandiisocyanat (H₁₂MDI), Cyclohexan-1,3-diisocyanat und Cyclohexan-1,4-diisocyanat (CHDI), 1,3- und 1,4-Bis-(isocyanatomethyl)-cyclohexan, 4,4'-Diisocyanatodicyclohexyl-2,2-propan, m- und p-Phenylendiisocyanat, 2,3,5,6-Tetramethyl-1,4-diisocyanatobenzol, 3,3'-Dimethyl-4,4'-diisocyanatodiphenyl (TODI), 2,4- und 2,6-Toluylendiisocyanat (TDI), 2,2'-, 2,4'- und 4,4'-Diphenylmethandiisocyanat (MDI), Naphthalin-1,2-diisocyanat und Naphthalin-1,5-diisocyanat (NDI), m- und p-Xylylendiisocyanat (XDI), Tetramethylxylylendiisocyanat (TMXDI), sowie beliebige Mischungen der vorgenannten Isocyanate. Für die Zwecke der vorliegenden Erfindung sollen die erfindungsgemäßen Polyisocyanate auch Dimere (Uretdione) und Trimere (Isocyanurate) umfassen. Besondere Bedeutung kommt dabei dem HDI-Trimer zu. Des Weiteren sollen auch Oligomere umfasst sein, wie z.B. "polymeres MDI" mit n = 1 bis 8:

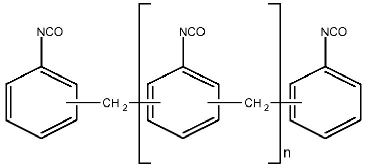

Das "organische Amin" ist vorzugsweise ein unsubstituiertes unverzweigtes, verzweigtes oder cyclisches, gesättigtes oder einfach oder mehrfach olefinisch ungesättigtes primäres Amin, vorzugsweise ein primäres aliphatisches Amin und insbesondere ein Fettamin.

Als besonders geeignet haben sich erfindungsgemäß C₆₋₂₂-Alkylamine erwiesen, insbesondere das Oleylamin und hier insbesondere in Verbindung mit MDI.

Der disubstituierte Harnstoff wird durch Umsetzung des Isocyanats mit dem organischen Amin entweder direkt in der organischen Phase hergestellt, oder er kann alternativ nach seiner Herstellung in einem Lösungsmittel durch Trocknung als wiederauflösbares Pulver erhalten werden.

Ein weiterer Gegenstand der vorliegenden Erfindung ist die Verwendung des besagten disubstituierten Harnstoffs zum Suspendieren von Fasern in der besagten organischen Phase.

Die vorliegende Erfindung wird nun anhand der nachfolgenden Beispiele näher erläutert.

### BEISPIELE

### Beispiel 1: Umsetzung von Oleylamin mit MDI

100 g Oleylamin wurden in 300 g Toluol gelöst. Unter starkem Rühren wurden in einem anderen Gefäß 46,77 g MDI (Lupranat® MI der BASF SE - Isomerengemisch) in 300 g Toluol gelöst und langsam (Temperaturerhöhung) zur Oleylamin-Lösung zugegeben. Es wurde noch 30 min weitergerührt, dann wurde das Lösungsmittel verdampft. Man erhielt das Produkt als weißliches, wachsartiges Pulver.

### Beispiel 2: Umsetzung von Oleylamin mit MDI

34,07 g Oleylamin wurden unter starkem Rühren mit 600 g Paraffinöl (C₁₁₋₂₅-Fraktion) gemischt. Unter starkem Rühren wurden in einem anderen Gefäß 15,93 g (Lupranat® MI der BASF SE - Isomerengemisch) in 300 g Toluol gelöst und langsam zur Oleylamin-Lösung zugegeben (leichte Temperaturerhöhung). Es wurde noch 30 min weitergerührt. Man erhielt das Produkt als farblose, leicht opake, viskose, thixotrope, aber dennoch unter Druck pumpbare Lösung.

### Beispiel 3: Eigenschaften einer erfindungsgemäßen Fasersuspension

Eine Suspensionen aus 50 ml Paraffinöl (C₁₁₋₂₅-Fraktion), 3,0 g Produkt aus Beispiel 1 und 40 g Polymilchsäure-Fasern (Länge ca. 6 mm, Dicke < 20 µm) wurde 3 Stunden bzw. 1 Woche lang in einem Schraubdeckelgefäß gelagert. Es konnte keine Sedimentation der Fasern beobachtet werden. Die Pumpbarkeit der Suspension wurde mit einer druckbetriebenen Kartuschenpresse getestet. Bei einem Pumpdruck von 1 bar, einem Öffnungsdurchmesser von 20 mm und einem Kartuschendurchmesser von 4,6 cm konnte innerhalb von 3 Sekunden eine Menge von 80,1 g Suspension gepumpt werden (26,7 g/s). Es wurde beim Pumpen keine Entmischung beobachtet.

### Beispiel 4: Verschiedene Testreihen

Das Beispiel 3 wurde mit unterschiedlichen Fasern, Lösungsmitteln und Dispergiermitteln wiederholt. Die Ergebnisse sind in den Tabellen 1 (Lagerversuche) und 2 (Pumpversuche) wiedergegeben. Im Gegensatz zu Beispiel 3 wurde von Hand gepumpt. Man sieht, dass nur die erfindungsgemäßen disubstituierten Harnstoffe die eingangs gestellte Aufgabe lösen und dass Oleylamin in Verbindung mit MDI am besten wirkt.

**Tabelle 1**

| Versuch Nr. | Dispergiermittel (DM) | Menge DM | Lösungsmittel (LM) | Menge LM | Faserart | Fasermenge | Stab. 1 h | Stab. 24 h | Stab. 14 d | Bemerkungen |
|---|---|---|---|---|---|---|---|---|---|---|
| 1 | ohne | | Paraffinöl | 50 ml | PMS, PP | 10 g | nein | nein | nein | Nicht streichbar, trennt sich |
| 2 | ohne | | Aromaten | 50 ml | PMS, PP | 10 g | nein | nein | nein | Nicht streichbar, trennt sich |
| 3 | Lutensol® GD 70 | 1 g | Aromaten | 100 ml | PMS, PP | 3 g | nein | nein | nein | Nicht streichbar, trennt sich |
| 4 | Triton® CG 110 | 1 g | Aromaten | 100 ml | PMS, PP | 3 g | nein | nein | nein | Nicht streichbar, trennt sich |
| 5 | Triton® H 66 | 1 g | Aromaten | 100 ml | PMS, PP | 3 g | nein | nein | nein | Nicht streichbar, trennt sich |
| 6 | Natriumdodecylsulfat | 1 g | Aromaten | 100 ml | PMS, PP | 3 g | nein | nein | nein | Nicht streichbar, trennt sich |
| 7 | Sovermol® 1111 | 1 g | Aromaten | 100 ml | PMS, PP | 3 g | nein | nein | nein | Nicht streichbar, trennt sich |
| 8 | Sovermol® 920 | 1 g | Aromaten | 100 ml | PMS, PP | 3 g | nein | nein | nein | Nicht streichbar, trennt sich |
| 9 | Methyllaurat | 1 g | Aromaten | 100 ml | PMS, PP | 3 g | nein | nein | nein | Nicht streichbar, trennt sich |
| 10 | Butylacetat | 1 g | Aromaten | 100 ml | PMS, PP | 3 g | nein | nein | nein | Nicht streichbar, trennt sich |
| 11 | BYK® 306 | 1 g | Aromaten | 100 ml | PMS, PP | 3 g | nein | nein | nein | Nicht streichbar, trennt sich |
| 12 | Disperbyk® 180 | 1 g | Aromaten | 100 ml | PMS, PP | 3 g | nein | nein | nein | Nicht streichbar, trennt sich |
| 13 | BYK® W 980 | 1 g | Aromaten | 100 ml | PMS, PP | 3 g | nein | nein | nein | Nicht streichbar, trennt sich |
| 14 | DBE-IB | 1 g | Aromaten | 100 ml | PMS, PP | 3 g | nein | nein | nein | Nicht streichbar, trennt sich |
| 15 | Ricinusöl | 1 g | Aromaten | 100 ml | PMS, PP | 3 g | nein | nein | nein | Nicht streichbar, trennt sich |
| 16 | Oleylamin - Lupranat® MI | 1 g | Aromaten | 100 ml | PMS | 3 g | ja | ja | ja | Verdickende Wirkung, streichbar |
| 17 | Oleylamin - Lupranat® MI | 1 g | Aromaten | 100 ml | PMS | 20 g | ja | ja | ja | Verdickende Wirkung, streichbar |
| 18 | Oleylamin - Lupranat® MI | 2 g | Aromaten | 100 ml | PMS | 10 g | ja | ja | ja | Verdickende Wirkung, streichbar |
| 19 | Oleylamin - Lupranat® MI | 2 g | Aromaten | 100 ml | PMS | 30 g | ja | ja | ja | Verdickende Wirkung, streichbar |
| 20 | Oleylamin - Lupranat® MI | 4 g | Aromaten | 100 ml | PMS | 3 g | ja | ja | ja | Verdickende Wirkung, streichbar |
| 21 | Oleylamin - Lupranat® MI | 4 g | Aromaten | 100 ml | PMS | 10 g | ja | ja | ja | Verdickende Wirkung, streichbar |
| 22 | Oleylamin - Lupranat® MI | 1 g | Paraffinöl | 50 ml | PMS | 20 g | ja | ja | ja | Verdickende Wirkung, streichbar |
| 23 | Oleylamin - Lupranat® MI | 1 g | Paraffinöl | 50 ml | PMS | 30 g | ja | ja | ja | Verdickende Wirkung, streichbar |
| 24 | Oleylamin - Lupranat® MI | 2 g | Paraffinöl | 50 ml | PMS | 20 g | ja | ja | ja | Verdickende Wirkung, streichbar |
| 25 | Oleylamin - Lupranat® MI | 2 g | Paraffinöl | 50 ml | PMS | 30 g | ja | ja | ja | Verdickende Wirkung, streichbar |
| 26 | Oleylamin - Lupranat® MI | 3 g | Paraffinöl | 50 ml | PMS | 40 g | ja | ja | ja | Verdickende Wirkung, streichbar |
| 27 | Oleylamin - Lupranat® MI | 2 g | Paraffinöl | 50 ml | pp | 10 g | ja | ja | ja | Verdickende Wirkung, streichbar |
| 28 | Oleylamin - Lupranat® MI | 2 g | Paraffinöl | 50 ml | PVA | 10 g | ja | ja | ja | Verdickende Wirkung, streichbar |
| 29 | Oleylamin - Lupranat® MI | 2 g | Paraffinöl | 50 ml | Cellulose | 10 g | ja | ja | ja | Verdickende Wirkung, streichbar |
| 30 | Octadecylamin - Lupranat® MI | 5 g | Paraffinöl | 50 ml | PMS, PP | 20 g | ja | ja | ja | Geringe Sedimentation |
| 31 | Ethylhexylamin - Lupranat® MI | 5 g | Paraffinöl | 50 ml | PMS, PP | 20 g | ja | ja | ja | Geringe Sedimentation |
| 32 | Oleylamin - Desmodur®N3600 | 3 g | Paraffinöl | 50 ml | PMS, PP | 10 g | ja | nein | nein | Einige Stunden stabil |
| 33 | Tallowamin - Lupranat® MI | 3 g | Paraffinöl | 50 ml | PMS, PP | 10 g | ja | ja | ja | Mäßig verdickende Wirkung |

| | | | | | | | | | | |
|---|---|---|---|---|---|---|---|---|---|---|
| Legende Paraffinöl: C₁₁₋₂₅-Fraktion PMS: Polymilchsäurefasern, Länge ca. 6 mm, Dicke < 20 µm PMS, PP: beide Faserarten wurden unabhängig voneinander getestet Cellolose: Cellulosefasern, ungefähr gleiche Abmessung Triton® CG 110: Dow Chemicals - Alkylpolyglucosid-Tensid Sovermol® 1111: BASF SE - verzweigtes Polyether-Polyol BYK® 306: Silikontensid der Fa. Byk DBE-IB: hochsiedendes, oxygeniertes, lösungsmittelhaltiges Diisobutyladipat-, -Glutarat- und -Succinat-Gemisch der Fa. Invista Lupranat® MI: BASF SE - MDI-Isomerengemisch Tallowamin: aminierter tierischer Talg (Fettamin) Aromaten: C₉-Aromatengemisch PP: Polypropylenfasern, ungefähr gleiche Abmessung PVA: Polyvinylalkoholfasern, ungefähr ca. gleiche Abmessung Lutensol® GD 70: BASF SE - Alkylpolyglucosid-Tensid Triton® H 66: Dow Chemicals - anionisches Phosphat-Polyether-Tensid Sovermol® 920: BASF SE - verzweigtes Polyether-Polyol Disperbyk® 180: Dispergieradditiv für organische Systeme, Fa. Byk BYK® W980: Dispergieradditiv für organische Harze, Fa. Byk Desmodur® N 3600: Bayer AG, HDI-Trimer | | | | | | | | | | |

**Tabelle 2**

| Versuch Nr. | Disperiermittel (DM) | Menge DM | Lösungsmittel (LM) | Menge LM | Faserart | Fasermenge | Gepumpte | Pumpzeit | Huspressöffnung | Bemerkung |
|---|---|---|---|---|---|---|---|---|---|---|
| 1 | Oleylamin - Lupranat® MI | 2 g | Aromaten | 100 ml | PMS | 30 g | 70% | 10 s | Ø 1 cm | Öffnung verstopft |
| 2 | Oleylamin - Lupranat® MI | 4 g | Aromaten | 100 ml | PMS | 10 g | 70% | 10 s | Ø 1 cm | Fast alles ausgepresst, dann verstopft |
| 3 | Oleylamin - Lupranat® MI | 1 g | Paraffinöl | 50 ml | PMS | 10 g | 96% | 10 s | Ø 2 cm | Funktioniert sehr gut, homogener Strang |
| 4 | Oleylamin - Lupranat® MI | 1 g | Paraffinöl | 50 ml | PMS | 20 g | 96% | 10 s | Ø 2 cm | Funktioniert sehr gut, homogener Strang |
| 5 | Oleylamin - Lupranat® MI | 2 g | Paraffinöl | 50 ml | PMS | 20 g | 96% | 10 s | Ø 2 cm | Funktioniert sehr gut, homogener Strang |
| 6 | Oleylamin - Lupranat® MI | 2 g | Paraffinöl | 50 ml | PMS | 25 g | 96% | 10 s | Ø 2 cm | Funktioniert sehr gut, homogener Strang |
| 7 | Oleylamin - Lupranat® MI | 1 g | Paraffinöl | 50 ml | PMS | 30 g | 96% | 10 s | Ø 2 cm | Funktioniert schlecht, verstopft, zu wenig DM |
| 8 | Oleylamin - Lupranat® MI | 2 g | Paraffinöl | 50 ml | pp | 10 g | 96% | 10 s | Ø 2 cm | Funktioniert sehr gut, homogener Strang |
| 9 | Oleylamin - Lupranat® MI | 2 g | Paraffinöl | 50 ml | PVA | 10 g | 96% | 10 s | Ø 2 cm | Funktioniert sehr gut, homogener Strang |
| 10 | Oleylamin - Lupranat® MI | 2 g | Paraffinöl | 50 ml | Cellulose | 10 g | 96% | 10 s | Ø 2 cm | Funktioniert sehr gut, homogener Strang |
| 11 | Oleylamin - Lupranat® MI | 2 g | Paraffinöl | 50 ml | PMS | 30 g | 96% | 10 s | Ø 2 cm | Funktioniert sehr gut, homogener Strang |
| 12 | Oleylamin - Lupranat® MI | 3 g | Paraffinöl | 50 ml | PMS | 40 g | 96% | 10 s | Ø 2 cm | Funktioniert sehr gut, homogener Strang |
| 13 | Oleylamin - Lupranat® MI | 2,5 g | Paraffinöl | 50 ml | PMS | 50 g | 90% | 10 s | Ø 2 cm | Funktioniert noch recht gut, homogener Strang |

| | | | | | | | | | | |
|---|---|---|---|---|---|---|---|---|---|---|
| Legende entspricht Tabelle 1 | | | | | | | | | | |

## Patentansprüche

1. Pumpbare, lagerstabile Suspension von Fasern in einer organischen Phase, umfassend
1,0 - 60 Gew.-% Fasern und
0,01 - 10 Gew.-% eines disubstituierten Harnstoffs.

2. Suspension nach Anspruch 1, umfassend 10 - 60, vorzugsweise 25 - 50 Gew.-% Fasern.

3. Suspension nach Anspruch 1 oder 2, umfassend 0,05 - 10, vorzugsweise 0,1 - 5 Gew.-% des disubstituierten Harnstoffs.

4. Suspension nach einem der Ansprüche 1 - 3, **dadurch gekennzeichnet, dass** die organische Phase aus der Gruppe, bestehend aus Mineralöl, Erdöl, Paraffinöl, Waschbenzin, Petroleum, naphthenischen Ölen, aromatischen Ölen, aliphatischen und aromatischen Kohlenwasserstoffen, fetten Ölen, Fettsäureestern, Silikonölen, Phthalateestern, sowie Mischungen daraus ausgewählt ist.

5. Suspension nach einem der Ansprüche 1 - 4, **dadurch gekennzeichnet, dass** die Fasern aus Polyolefinen, umfassend Polyethylen und Polypropylen; Polyvinylalkohol; Polyacrylnitril; Polyestern, umfassend Polyglycoladipat, Polyethylenterephthalat, Polymilchsäure; Polyamiden, umfassend Polycaprolactam, Polyamid 66, Polyamid 6T; anorganischen Materialien, umfassend Glas, Kohlenstoff, Basalt und Metalle; oder nachwachsenden Materialien, umfassend Cellulose und Lignin; sowie Mischungen daraus, bestehen.

6. Suspension nach einem der Ansprüche 1 - 5, **dadurch gekennzeichnet, dass** die Fasern Durchmesser von 2 µm bis 2 mm, vorzugsweise 10 µm bis 100 µm, und Längen von 0,1 mm bis 25 cm, vorzugsweise von 1 mm bis 10 cm, bei einem Aspektverhältnis von mindestens 10, vorzugsweise mindestens 100, aufweisen.

7. Suspension nach einem der Ansprüche 1 - 6, **dadurch gekennzeichnet, dass** der disubstituierte Harnstoff ein aus einem Monoisocyanat oder Polyisocyanat und einem Fettamin erhältlicher disubstituierter Harnstoff ist.

8. Suspension nach einem der Ansprüche 1 - 7, **dadurch gekennzeichnet, dass** der disubstituierte Harnstoff ein aus Oleylamin und Diphenylmethandiisocyanat (MDI) erhältlicher disubstituierter Harnstoff ist.

9. Verwendung eines disubstituierten Harnstoffs gemäß der Definition eines der Ansprüche 1 - 8 zum Suspendieren von Fasern in einer organischen Phase.

## Claims

1. Pumpable shelf-stable suspension of fibers in an organic phase, comprising
1.0 - 60 wt% of fibers, and
0.01 - 10 wt% of a disubstituted urea.

2. Suspension according to Claim 1 comprising 10 - 60, preferably 25 - 50 wt% of fibers.

3. Suspension according to Claim 1 or 2 comprising 0.05 - 10, preferably 0.1 - 5 wt% of the disubstituted urea.

4. Suspension according to any of Claims 1 - 3 **characterized in that** the organic phase is selected from the group consisting of mineral oil, crude oil, paraffin oil, benzine, petroleum, naphthenic oils, aromatic oils, aliphatic and aromatic hydrocarbons, fatty oils, fatty acid esters, silicone oils, phthalate esters and mixtures thereof.

5. Suspension according to any of Claims 1 - 4 **characterized in that** the fibers consist of polyolefins comprising polyethylene and polypropylene; polyvinyl alcohol; polyacrylonitrile; polyesters comprising polyglycol adipate, polyethylene terephthalate, polylactic acid; polyamides comprising polycaprolactam, nylon 66, nylon 6T; inorganic materials comprising glass, carbon, basalt and metals; or renewable materials comprising cellulose and lignin; and mixtures thereof.

6. Suspension according to any of Claims 1 - 5 **characterized in that** the fibers have diameters of 2 µm to 2 mm, preferably 10 µm to 100 µm, and lengths of 0.1 mm to 25 cm, preferably of 1 mm to 10 cm, subject to the proviso of an aspect ratio of not less than 10, preferably not less than 100.

7. Suspension according to any of Claims 1 - 6 **characterized in that** the disubstituted urea is a disubstituted urea obtainable from a monoisocyanate or polyisocyanate and a fatty amine.

8. Suspension according to any of Claims 1 - 7 **characterized in that** the disubstituted urea is a disubstituted urea obtainable from oleylamine and diphenylmethane diisocyanate (MDI).

9. Use of a disubstituted urea as defined in any of Claims 1 - 8 to suspend fibers in an organic phase.

## Revendications

1. Suspension pompable et stable au stockage de fibres dans une phase organique, comprenant :
1,0 à 60 % en poids de fibres et
0,01 à 10 % en poids d'une urée disubstituée.

2. Suspension selon la revendication 1, comprenant 10 à 60, de préférence 25 à 50 % en poids de fibres.

3. Suspension selon la revendication 1 ou 2, comprenant 0,05 à 10, de préférence 0,1 à 5 % en poids de l'urée disubstituée.

4. Suspension selon l'une quelconque des revendications 1 à 3, **caractérisée en ce que** la phase organique est choisie dans le groupe constitué par l'huile minérale, le pétrole, l'huile de paraffine, l'essence de lavage, la paraffine, les huiles naphténiques, les huiles aromatiques, les hydrocarbures aliphatiques et aromatiques, les huiles grasses, les esters d'acides gras, les huiles de silicone, les esters de phtalate, ainsi que leurs mélanges.

5. Suspension selon l'une quelconque des revendications 1 à 4, **caractérisée en ce que** les fibres sont constituées de polyoléfines, comprenant le polyéthylène et le polypropylène ; d'alcool polyvinylique ; de polyacrylonitrile ; de polyesters, comprenant le polyadipate de glycol, le polytéréphtalate d'éthylène, l'acide polylactique ; de polyamides, comprenant le polycaprolactame, le polyamide 66, le polyamide 6T ; de matériaux inorganiques, comprennent le verre, le carbone, le basalte et les métaux ; ou de matériaux renouvelables, comprenant la cellulose et la lignine ; ainsi que leurs mélanges.

6. Suspension selon l'une quelconque des revendications 1 à 5, **caractérisée en ce que** les fibres présentent des diamètres de 2 µm à 2 mm, de préférence de 10 µm à 100 µm, et des longueurs de 0, 1 mm à 25 cm, de préférence de 1 mm à 10 cm, avec un rapport de longueur d'au moins 10, de préférence d'au moins 100.

7. Suspension selon l'une quelconque des revendications 1 à 6, **caractérisée en ce que** l'urée disubstituée est une urée disubstituée pouvant être obtenue à partir d'un monoisocyanate ou d'un polyisocyanate et d'une amine grasse.

8. Suspension selon l'une quelconque des revendications 1 à 7, **caractérisée en ce que** l'urée disubstituée est une urée disubstituée pouvant être obtenue à partir d'oléylamine et de diisocyanate de diphénylméthane (MDI).

9. Utilisation d'une urée disubstituée selon la définition d'une des revendications 1 à 8 pour la resuspension de fibres dans une phase organique.
